# EUROPÄISCHE PATENTSCHRIFT

(11) **EP 1 544 105 B1**
(45) Veröffentlichungstag und Bekanntmachung des Hinweises auf die Patenterteilung: **21.02.2007**
(21) Anmeldenummer: 04028398.8
(22) Anmeldetag: 01.12.2004
(51) Int. Cl.: B64D 11/06, B60P 7/08, B60N 2/015, B23K 20/00

(54) **Sitzschiene**
Seat rail
Rail de fixation pour siège

(30) Priorität: 19.12.2003 DE 10360809
(43) Veröffentlichungstag der Anmeldung: 22.06.2005
(73) Patentinhaber: Airbus Deutschland GmbH, 21129 Hamburg (DE)
(72) Erfinder: Vichniakov, Alexei, Dr.-Ing., 39171 Bahrendorf (DE); Assler, Herwig, Dr.-Ing., 21723 Hollern-Twielenfleth (DE)
(74) Vertreter: Hansmann, Dierk

(56) Entgegenhaltungen:
- EP-A- 0 922 632
- WO-A-98/02277
- GB-A- 2 321 626
- GB-A- 2 387 151
- US-A- 3 396 678

## Beschreibung

Die Erfindung betrifft eine Sitzschiene für die Befestigung von Sitzen in Verkehrsflugzeugen in Form einer Profilschiene mit einem oberen Profilbereich für die Befestigung der Sitze und einem unteren, mit diesem verbundenen Trägerbereich, wobei Teilbereiche der Sitzschiene aus unterschiedlichen Werkstoffen bestehen.

Die in Verkehrsflugzeugen verwendeten Profilschienen zum Befestigen von Passagiersitzen sind in der Regel genormt, beispielsweise durch die Luftfahrtnorm LN 29 890. Gemeinsam ist diesen Profilschienen, daß sie einen Ω- oder T-förmigen unteren Trägerbereich und einen darüber angeordneten C-schienenartigen Profilbereich aufweisen, dessen nach oben, d.h. in die Kabine, weisende Öffnung zwischen zwei nach innen ragenden Schenkeln abwechselnd aus Bohrungen und Schlitzen besteht.

Entsprechende Befestigungseinrichtungen zum lösbaren Befestigen von Gegenständen, insbesondere von Passagiersitzen, in einer Flugzeug-Sitzschiene mit C-Profil unter Verwendung genormter Sitzschienenabmessungen sind unter anderem aus der DE 42 24 821 A1 bekannt geworden. Eine ähnliche Profilschiene, bei der allerdings das offene C-Profil nach unten weist, ist auch aus der EP 0 922 632 A2 bekannt geworden. Weiterhin ist aus der RU 2 136 548 C1 eine Einrichtung für die Befestigung von Passagiersitzen bekannt, bei der kantenförmige Elemente für die Befestigung der Passagiersitzen in der Sitzschiene vorgesehen sind. Schließlich ist auch in der US 6 554 225 B1 eine Anordnung von Sitzschienen in einer Leichtbaufußbodenstruktur in einem Flugzeug beschrieben, bei der die Anordnungsmöglichkeit von T-förmigen Sitzschienen im Fußboden eines Flugzeuges vorgesehen ist.

Die bei diesen bekannten Anordnungen verwendeten Sitzschienen bestehen üblicherweise aus einer hochfesten Aluminiumlegierung, wofür Gewichtsgründe die wesentliche Rolle spielen. Insbesondere die Aluminiumlegierungen aus der Aluminium-ZinkGruppe, d.h. die sogenannten 7XXX-Legierungen, zeichnen sich durch eine hohe mechanische Festigkeit aus und gelten deshalb als für Sitzschienen, die in einer Flugzeugstruktur sehr hohen mechanischen Belastungen standhalten müssen, besonders geeignete Werkstoffe.

Neben den mechanischen Eigenschaften stellt jedoch auch die Beständigkeit gegen Korrosion eine wesentliche Eigenschaft bei der Auswahl eines geeigneten Werkstoffes für Sitzschienen dar, da der Bereich des Fußbodens in Flugzeugkabinen vielfältigen korrosiven Beanspruchungen ausgesetzt ist. Eine mögliche Maßnahme zur Verhinderung von Korrosion in diesem Bereich besteht in der Verwendung von Zusatzabdeckungen für die Sitzschienen, wie dies aus den US 6 498 297 B2 und US 4 457 701 bekannt geworden ist. Eine weitere Möglichkeit, die Beständigkeit von Sitzschienen gegen Korrosion zu erhöhen, besteht in der Verwendung von korrosionsbeständigen Werkstoffen. So ist es insbesondere bereits bekannt geworden, Sitzschienen aus hochfesten Titanlegierungen, insbesondere aus dem Werkstoff Ti-6A1-4V, herzustellen.

Die Verwendung von Titanlegierungen als Sitzschienenwerkstoff bringt jedoch neben den eindeutigen Vorteilen hinsichtlich der Korrosionsbeständigkeit eine erhebliche Gewichts- und Kostenerhöhung mit sich. So ist eine Sitzschiene aus einer Titanlegierung um etwa 30 Prozent schwerer als eine ähnliche Sitzschiene aus einer hochfesten Aluminiumlegierung. Dadurch kommt es zur einer Gewichtserhöhung für die gesamte Fußbodenstruktur eines Verkehrsflugzeuges um bis zu mehrere hundert Kilogramm. Gleichzeitig stellt die Verwendung von Sitzschienen aus Titanlegierungen eine sehr kostenaufwendige Lösung des Korrosionsproblems dar, da eine solche Titan-Sitzschiene um bis zu einem Faktor 10 teurer als eine konventionelle Sitzschiene aus einer Aluminiumlegierung sein kann.

Ferner sind nach der GB-A-2 387 151 Profilelemente zum Befestigen von Sitzen bekannt, welche ein Trägerelement zur Versteifung besitzen.

Schließlich ist aus der GB-A-2 320 183 eine verstellbare Sitzschiene für Motorfahrzeuge bekannt geworden, die aus mehreren Elementen gefügt ist und bei der ein Teil des Profilbereiches aus einem anderem Werkstoff als der übrige Teil der Sitzschiene bestehen kann. Diese bekannte Sitzschiene erscheint jedoch aufgrund ihrer speziellen Ausgestaltung für einen Einsatz in Verkehrsflugzeugen nicht geeignet.

Aufgabe der Erfindung ist es, eine Sitzschiene der eingangs genannten Art mit ausgezeichneten mechanischen und Korrosionseigenschaften bereitzustellen, die preisgünstig ist und zugleich ein möglichst geringes Gewicht aufweist.

Die Erfindung löst diese Aufgabe durch die Merkmale des Anspruchs 1.

Durch diese erfindungsgemäß vorgesehene Verwendung eines Werkstoffverbundes, gebildet aus einem oberen Profilbereich, der aus einer Titanlegierung besteht, für die Befestigung von Sitzen und einem unterem Trägerbereich aus einer hochfesten Aluminium- oder Magnesiumlegierung als einteiliges strukturtragendes Element ist eine deutliche Verbesserung der Korrosionsbeständigkeit ohne eine zu große Gewichtserhöhung erzielbar. Zugleich ermöglicht diese erfindungsgemäße Lösung eine erhebliche Reduzierung der Kosten für eine derartige korrosionsbeständige Sitzschiene, verglichen mit einer solchen, die vollständig aus einer Titanlegierung besteht.

Die Herstellung der Verbindung zwischen dem aus einer Titanlegierung bestehenden oberen Profilbereich und dem unteren Trägerbereich aus einer Aluminium- oder Magnesiumlegierung erfolgt bei der bevorzugten Ausführungsform der Erfindung bei höheren Temperaturen und unter Anwendung eines Preßdruckes. Dabei können zur Verbesserung der Verbindungsfestigkeit am Profilbereich und/oder am Trägerbereich in den miteinander zu verbindenden Bereichen jeweils sägezahnförmige Profile vorgesehen sein. Zusätzlich können in vorteilhafter Weiterbildung der Erfindung bei der Verbindung der beiden Teilbereiche noch eine oder mehrere dünne Folien aus artgleichen oder artfremden Werkstoffen zwischen diesen beiden Teilbereichen angeordnet werden.

Nachfolgend soll die Erfindung anhand von in der Zeichnung dargestellten Ausführungsbeispielen näher erläutert werden. Es zeigen
- Fig. 1: eine perspektivische Darstellung einer T-förmigen Sitzschiene,
- Fig. 2: einen Schnitt durch die Sitzschiene gemäß Fig. 1,
- Fig. 3: eine vergrößerte Detaildarstellung des Bereiches III in der Anordnung gemäß Fig. 2 und
- Fig. 4:: eine perspektivische Darstellung einer Ω-förmigen Sitzschiene.

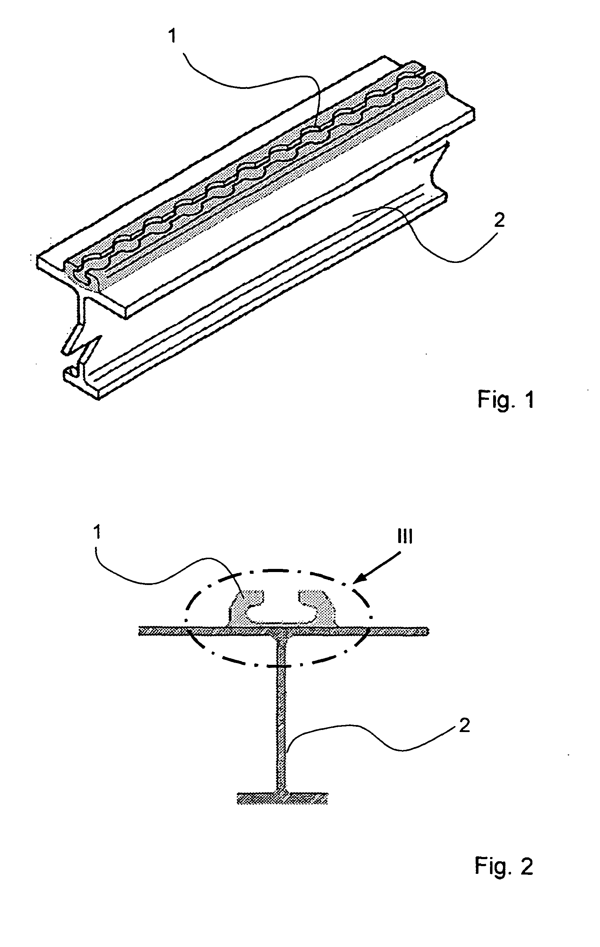

Die in den Figuren 1 bis 3 dargestellte T-förmige Sitzschiene für die Befestigung von Sitzen in einem Verkehrsflugzeug besitzt deutlich verbesserte mechanische und korrosive Eigenschaften durch die Verwendung eines bimetallischen Verbundes. Dieser Verbund besteht aus einem oberen C-förmigen Profilbereich 1 aus einer Titanlegierung für die Befestigung von Sitzen sowie einem unteren, in diesem Fall T-förmigen Trägerbereich 2 aus einer Aluminiumlegierung, wobei die Verbindung zwischen den beiden Teilbereichen 1 und 2 durch eine homogene metallurgische Verbindung erzeugt wird. Bei den verwendeten Werkstoffen handelt es sich jeweils um hochfeste Legierungen, im Fall des hier beschriebenen Ausführungsbeispiels um die Titanlegierung Ti-6A1-4V sowie um die Aluminiumlegierung AA 7475.

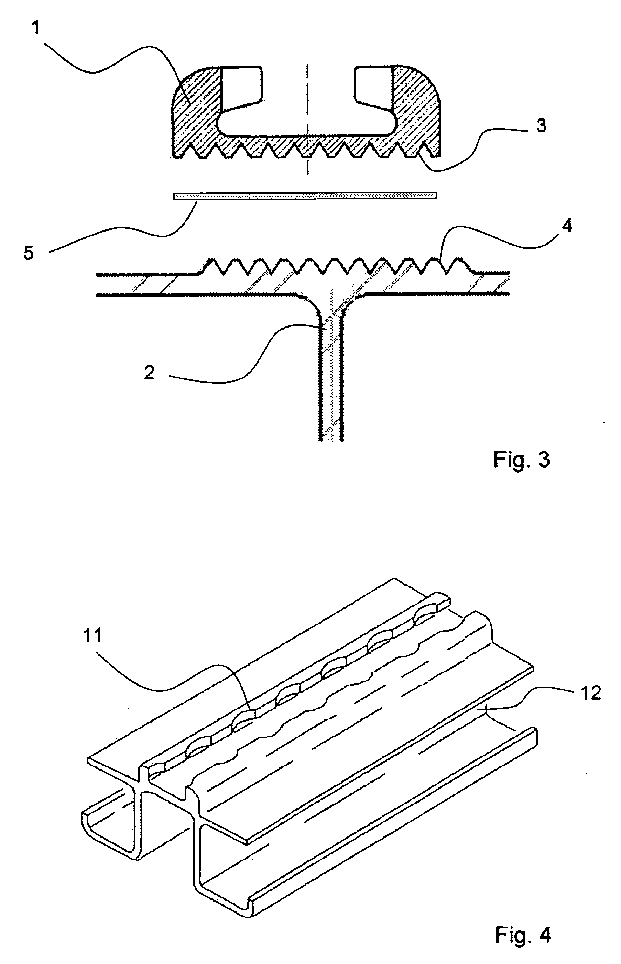

Die in Fig. 4 dargestellte Anordnung unterscheidet sich von der vorangehend beschriebenen dahingehend, daß hier ein ebenfalls C-förmiger Profilbereich 11 aus einer Titanlegierung auf einem in diesem Fall Ω-förmigen unteren Trägerbereich 12 aus einer Aluminiumlegierung angeordnet ist.

Die Herstellung der bimetallischen Sitzschiene erfolgt in beiden Fällen durch Verbinden des oberen C-förmigen Profilbereiches 1, 11 mit dem unteren Trägerbereich 2, 12 durch die Schaffung einer Diffusionsverbindung über ein Zusammenpressen der beiden Teile bei höheren Temperaturen. Zur Verbesserung der Verbindungsfestigkeit weist dabei, wie insbesondere aus Fig. 3 ersichtlich, wenigstens einer der zu verbindenden Bereiche 1, 11, 2, 12, im Fall des in Fig. 3 dargestellten Ausführungsbeispiels beide Bereiche 1, 2, in dem zu verbindenden Bereich sägezahnartige Profile 3, 4 auf. Eine weitere Verbesserung der Verbindungsfestigkeit ist durch die Verwendung wenigstens einer dünnen Folie 5 zwischen den beiden zu verbindenden Sitzschienenteilbereichen erzielbar. Als Folienwerkstoff werden dabei in vorteilhafter Weise Aluminium-, Titan- oder Nioblegierungen verwendet. Zur weiteren Gewichtsreduzierung ist es schließlich vorteilhaft, wenn der untere Trägerbereich 2, 12 statt aus einer Aluminiumlegierung aus einer ebenfalls hochfesten Magnesiumlegierung besteht.

In all diesen Fällen ist es ferner vorteilhaft, wenn zumindest der unmittelbare verbindungsbereich der beiden aus Werkstoffen mit unterschiedlichen elektrochemischen Potentialen bestehenden Elemente 1, 11 und 2, 12 durch eine geeignete Isolierung oder Beschichtung vor der unmittelbaren Beaufschlagung durch ein korrosives Medium geschützt wird.

## Patentansprüche

1. Sitzschiene für die Befestigung von Sitzen in Verkehrsflugzeugen in Form einer Profilschiene, die aus einem oberen Profilbereich für die Befestigung der Sitze und einem unteren, mit diesem verbundenen Trägerbereich besteht, wobei Teilbereiche der Sitzschiene aus unterschiedlichen Werkstoffen bestehen, **dadurch gekennzeichnet, daß** der Profilbereich (1, 11) aus einer Titanlegierung und der Trägerbereich (2, 12) aus einer Aluminiumlegierung oder aus einer Magnesiumlegierung besteht und daß die beiden Bereiche (1, 11, 2, 12) durch eine homogene metallurgische Verbindung zu einer einteiligen Vorrichtung miteinander verbunden sind.

2. Sitzschiene nach Anspruch 1, **dadurch gekennzeichnet, daß** wenigstens einer der beiden Bereiche (1, 11, 2, 12) im Verbindungsbereich ein Profil (3, 4) aufweist.

3. Sitzschiene nach einem der Ansprüche 1 bis 2, **dadurch gekennzeichnet, daß** zwischen den beiden Bereichen (1, 11, 2, 12) wenigstens eine folienförmiges Zwischenelement (5) angeordnet ist.

4. Sitzschiene nach Anspruch 3, **dadurch gekennzeichnet, daß** die Folie (5) aus einem Aluminiumwerkstoff besteht.

5. Sitzschiene nach Anspruch 3, **dadurch gekennzeichnet, daß** die Folie (5) aus einem Titanwerkstoff besteht.

6. Sitzschiene nach Anspruch 3, **dadurch gekennzeichnet, daß** die Folie (5) aus einer Nioblegierung besteht.

7. Sitzschiene nach einem der Ansprüche 1 bis 6, **dadurch gekennzeichnet, daß** die Verbindung zwischen den beiden Bereichen (1, 11, 2, 12) unter einem Anpreßdruck von wenigstens 10 MPa erfolgt.

8. Sitzschiene nach einem der Ansprüche 1 bis 7, **dadurch gekennzeichnet, daß** die Verbindung zwischen den beiden Bereichen (1, 11, 2, 12) bei einer Temperatur von wenigstens 50°C erfolgt.

## Claims

1. Seat mounting rail for securing seats in commercial aircraft, in the form of a profiled rail which comprises an upper profiled region for securing the seats and a lower supporting region, connected thereto, sections of the seat mounting rail being made of different materials, **characterised in that** the profiled region (1, 11) is made of a titanium alloy and the supporting region (2, 12) is made of an aluminium alloy or a magnesium alloy, and **in that** the two regions (1, 11, 2, 12) are connected together by a homogenous metallurgical bond to form a one-piece device.

2. Seat mounting rail according to claim 1, **characterised in that** at least one of the two regions (1, 11, 2, 12) comprises a profile (3, 4) in the connecting region.

3. Seat mounting rail according to either of claims 1 to 2, **characterised in that** at least one foil-like intermediate element (5) is arranged between the two regions (1, 11, 2, 12).

4. Seat mounting rail according to claim 3, **characterised in that** the foil (5) is made of an aluminium material.

5. Seat mounting rail according to claim 3, **characterised in that** the foil (5) is made of a titanium material.

6. Seat mounting rail according to claim 3, **characterised in that** the foil (5) is made of a niobium alloy.

7. Seat mounting rail according to any one of claims 1 to 6, **characterised in that** the bond between the two regions (1, 11, 2, 12) is made by applying a contact pressure of at least 10 MPa.

8. Seat mounting rail according to any one of claims 1 to 7, **characterised in that** the bond between the two regions (1, 11, 2, 12) is made at a temperature of at least 50 °C.

## Revendications

1. Rail pour fixer des sièges dans des avions de ligne, ce rail ayant la forme d'un rail profilé constitué d'une zone supérieure profilée pour la fixation du siège et d'une zone inférieure porteuse reliée à la précédente, des zones partielles du rail étant réalisées en des matières différentes, **caractérisé en ce que** la zone de profilé (1, 11) est en alliage de titane, tandis que la zone porteuse (2, 12) est en alliage d'aluminium ou de magnésium, les deux zones (1, 11 ; 2, 12) étant réunies par une liaison métallurgique homogène pour donner un dispositif monobloc.

2. Rail de fixation de sièges selon la revendication 1, **caractérisé en ce qu'**au moins une des deux zones (1, 11 ; 2, 12) présente un profil (3, 4) dans la zone de liaison.

3. Rail de fixation de sièges selon la revendication 1 ou 2, **caractérisé en ce qu'**entre les deux zones (1, 11 ; 2, 12) est disposé au moins un élément intercalaire (5) ayant la forme d'une feuille.

4. Rail de fixation de sièges selon la revendication 3, **caractérisé en ce que** la feuille (5) est faite d'un matériau à base d'aluminium.

5. Rail de fixation de sièges selon la revendication 3, **caractérisé en ce que** la feuille (5) est faite d'un matériau à base de titane.

6. Rail de fixation de sièges selon la revendication 3, **caractérisé en ce que** la feuille (5) est faite d'un alliage de niobium.

7. Rail de fixation de sièges selon une des revendications 1 à 6, **caractérisé en ce que** la liaison entre les deux zones (1, 11 ; 2, 12) est réalisée sous une pression d'application d'au moins 10 MPa.

8. Rail de fixation de sièges selon une des revendications 1 à 7, **caractérisé en ce que** la liaison entre les deux zones (1, 11 ; 2, 12) est réalisée à une température d'au moins 50° C.
